# EUROPEAN PATENT SPECIFICATION

(11) **EP 2 086 041 B1**
(45) Date of publication and mention of the grant of the patent: **07.09.2011**
(21) Application number: 08101243.7
(22) Date of filing: 04.02.2008
(51) Int. Cl.: H01M 8/00, H01M 8/10

(54) **Apparatus for making tubular-shaped membrane electrode assemblies**
Vorrichtung zur Herstellung von röhrenförmigen Membran-Elektroden-Einheiten
Appareil de fabrication des ensembles membrane-électrode tubulaires

(43) Date of publication of application: 05.08.2009
(73) Proprietor: Atomic Energy Council - Institute of Nuclear Energy Research, 333 Taoyuan (TW)
(72) Inventor: Chang, Hwei-Lang,c/o ATOMIC ENERGY COUNCIL, 333, CHIAAN VILLAGE, LUNGTAN, TAOYUAN (TW); Chang, Hen-Rong, 324, Pingzhen City, Taoyuan County (TW); Shieh, Kuo-Lon, 325, Longtan Shiang, Taoyuan County (TW); Cheng, Pi-Hsin, 320, Zhongli City, Taoyuan County (TW)
(74) Representative: Beck & Rössig European Patent Attorneys

(56) References cited:
- WO-A-03/103079
- WO-A-2007/029873
- WO-A-2007/147271
- US-A1- 2006 251 942

## Description

### Field of the invention

The present invention relates to an apparatus for making a tubular-shaped membrane electrode assembly (MEA) and, more particularly, to an apparatus for the mass production of tubular-shaped membrane electrode assemblies.

### Description of the Related Arts

As disclosed in Taiwanese Patent M274656 (corresponding to US2006/0251942 A1), a tubular-shaped membrane electrode assembly includes a tubular-shaped proton-exchange membrane, a pair of catalyst layers and a pair of electron conductive clothes with leading wire. To make the tubular-shaped membrane electrode assembly, a precursor of tubular-shaped proton exchange membrane precursor is made of polymer in a melting and injection process. The tubular-shaped precursor is converted into the tubular-shaped proton-exchange membrane in an ion exchange process. Electrode catalyst paste is made via mixing electrode catalyst with material for making the proton exchange membrane. The electrode catalyst paste is coated on the tubular-shaped conductive cloth. The tubular-shaped proton-exchange membrane is inserted in between the pair of tubular-shaped conductive cloth with catalyst paste coated. This aligned entity of the tubular-shaped proton-exchange membrane, and the two tubular-shaped conductive cloth with catalyst paste coated are set in a mold, subjected to a heating and pressing process and removed from the mold. Thus, the tubular-shaped membrane electrode assembly is made.

With the manufacturing method mentioned above, only batch type manufacturing process is available. It means loss of efficiency and cost of much.The present invention is intended to alleviate or abbreviate the above-mentioned problems and make the tubular-shaped membrane electrode assembly be mass-produced continuously.

A method of making a tubular-shaped membrane electrode assembly of the type using woven electrodes is is known from WO 03/103079 A2. A method of continuously making a tubular shaped membrane electrode assembly by extrusion of the electrodes and the polymer electrolyte is known from WO 2007/029873 A1.

### Summary of the invention

The object of the present invention is to provide a technical apparatus for the making of a tubular-shaped membrane electrode assembly of the type using woven electrodes.

This object is achieved by an apparatus comprising the features of claim 1. Advanantageous embodiments are indicated in further claims.

Other objectives, advantages and features of the present invention will become apparent from the following description referring to the attached drawings.

### Brief description of the drawings

The present invention will be described via the detailed illustration of the preferred embodiment referring to the drawings.
Fig. 1 is a block diagram of an apparatus for making tubular-shaped membrane electrode assembly according to the preferred embodiment of the present invention.
Fig. 2 is a more detailed typical drawing for the apparatus shown in Fig. 1.
Fig. 3 is a cross-sectional view of a tubular-shaped membrane electrode assembly made by the apparatus shown in Fig. 2.
Fig. 4 is a cross-sectional view of a tubular assembly without catalyst layers made by the apparatus shown in Fig. 2.
Fig. 5 is a cross-sectional view of a pair of leading wires made by the apparatus shown in Fig. 2.

### Detailed description of embodiment

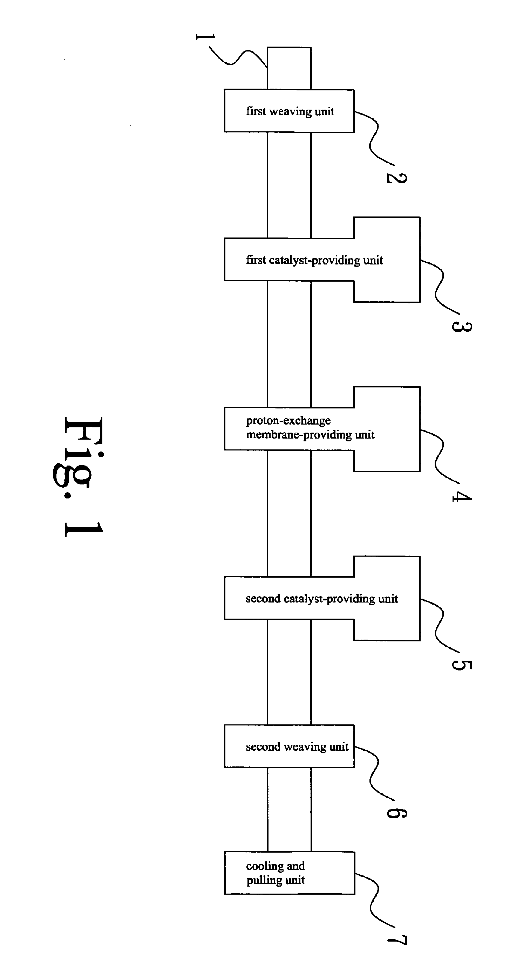

According to Fig. 1, an apparatus is devised to make tubular-shaped membrane electrode assembly according to the preferred embodiment of the present invention. The apparatus includes a guiding unit I (such as guiding rod, guiding tube or guiding wire) to guide the direction of MEA production, a first weaving unit 2 for weaving conductive fiber bundles into a first tubular conductive fabric around the guiding unit (or guiding rod, or guiding tube or guiding wire), a first catalyst-providing unit 3 for forming a first catalyst film on the first tubular conductive fabric, a proton-exchange-membrane-providing unit 4 for providing a proton-exchange-membrane on the first catalyst film, a second catalyst-providing unit 5 for forming a second catalyst film on the proton-exchange membrane, a second weaving unit 6 for weaving conductive fiber bundles into a second tubular conductive fabric on the second catalyst film, and a cooling and pulling unit 7 for cooling and pulling the first tubular conductive fabric, the first catalyst film, the proton-exchange-membrane, the second catalyst film and the second tubular conductive fabric into a tubular laminate that can be cut into tubular-shaped membrane electrode assembly of appropriate lengths. The guiding unit 1 is inserted through the first weaving unit 2, the first catalyst-providing unit 3, the proton-exchange-membrane-providing unit 4, the second catalyst-providing unit 5, the second weaving unit 6 and (or not necessary through) the cooling and pulling unit 7 arranged in order.

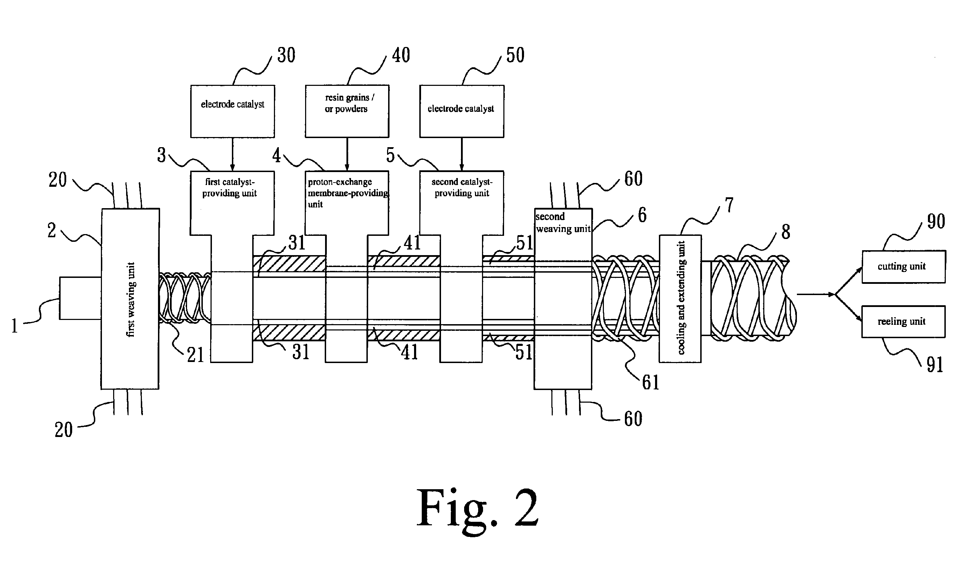

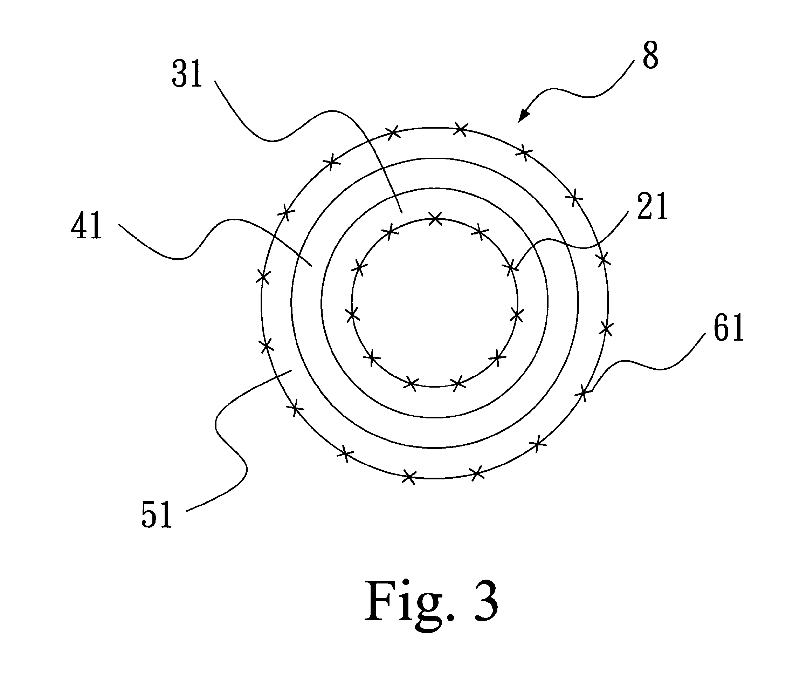

Referring to Figs. 2 and 3, in the first weaving unit 2, conductive fiber bundles 20 are provided. The conductive fiber bundles 20 may be made of carbon. The conductive fiber bundles 20 are woven into a first tubular conductive fabric 21 around the guiding rod 1. Then, the first tubular conductive fabric 21 is moved into the first catalyst-providing unit 30 along the guiding rod 1.

In the first catalyst-providing unit 3, electrode catalyst 30 suitable for fuel cells is provided, in liquid (or slurry, or paste), onto the tubular conductive fabric 21. After setting, the electrode catalyst 30 becomes a first catalyst film 31 around the tubular conductive fabric 21. Then, they are moved into the proton-exchange membrane -providing unit 4 along the guiding unit 1.

In the proton-exchange membrane-providing unit 4, resin grains or powders 40 are molten and provided onto the first catalyst film 31. The resin may be proton-exchanging resin or precursor. After setting, the resin forms a proton-exchange membrane 41 around the first catalyst film 31. Then, they are moved into the second catalyst-providing unit 5.

In the second catalyst-providing unit 5, electrode catalyst 50 suitable for fuel cells is provided, in liquid (or slurry, or paste), onto the proton-exchange-membrane 41. After setting, the electrode catalyst 50 becomes a second catalyst film 51 around the proton-exchange membrane 41. Then, they are moved into the second weaving unit 6 along the guiding rod 1.

In the second weaving unit 6, conductive fiber bundles 60 are provided. The conductive fiber bundles 60 may be made of carbon. The conductive fiber bundles 60 are woven into a second tubular conductive fabric 61 around the second catalyst film 51. Then, they are moved into the cooling and pulling unit 7 along the guiding rod 1 or the extending direction of the guiding rod 1.

In the cooling and pulling unit 7, the first conductive fabric 21, the first catalyst film 31, the proton-exchange-membrane 41, the second catalyst film 51 and the second tubular conductive fabric 61 are cooled and pulled, thus forming a tubular laminate 8. The thickness of proton-exchange membrane is in the range of one tenth to ten times of the inside diameter of the tubular-shaped membrane electrode assembly 8. The thickness of the first and second catalyst films 31 and 51 is one tenth of a micrometer to several millimeters.

The tubular laminate 8 may be sent to a cutting unit 90 where the tubular laminate 8 is cut into tubular-shaped membrane electrode assemblies of appropriate lengths.

Alternatively, the tubular laminate 8 may be sent to a reeling unit 91 where the tubular laminate 8 is reeled. The tubular laminate 8 can later be cut into tubular-shaped membrane electrode assemblies of appropriate lengths.

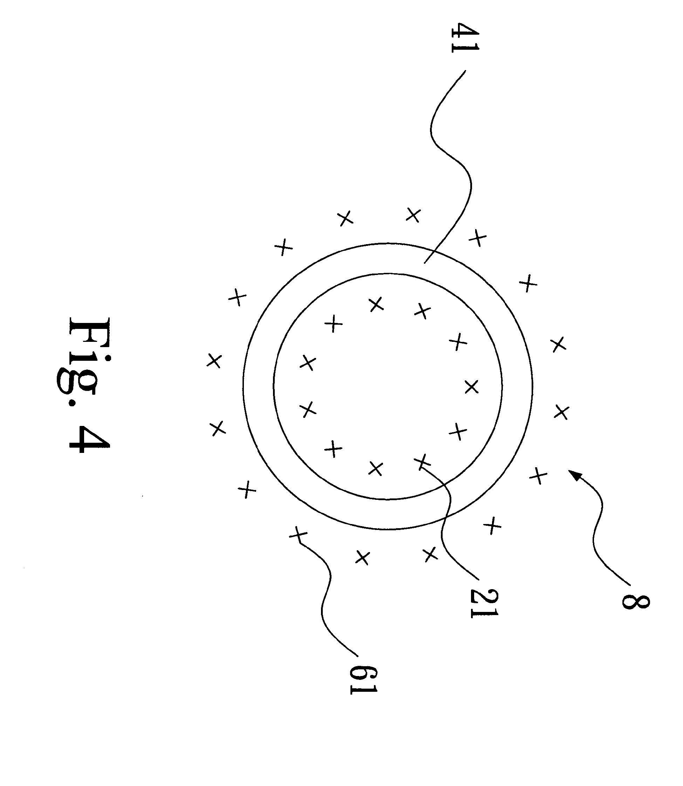

The apparatus shown in Fig. 2 can be used to make leads shown in Fig. 4. In this case, the first and second catalyst-providing units 3 and 5 are stopped. That is, only the first weaving unit 2, the proton-exchange-membrane-providing unit 4 and the second weaving unit 6 are activated to make a tubular assembly 8a including only the first and second tubular conductive fabrics 21 and 61 and the proton-exchange membrane 41. Later, the tubular assembly 8a can be cut and becomes a leading part of tubular-shaped MEA with leading part. This leading part may be used for binding in fuel cell assembly later.

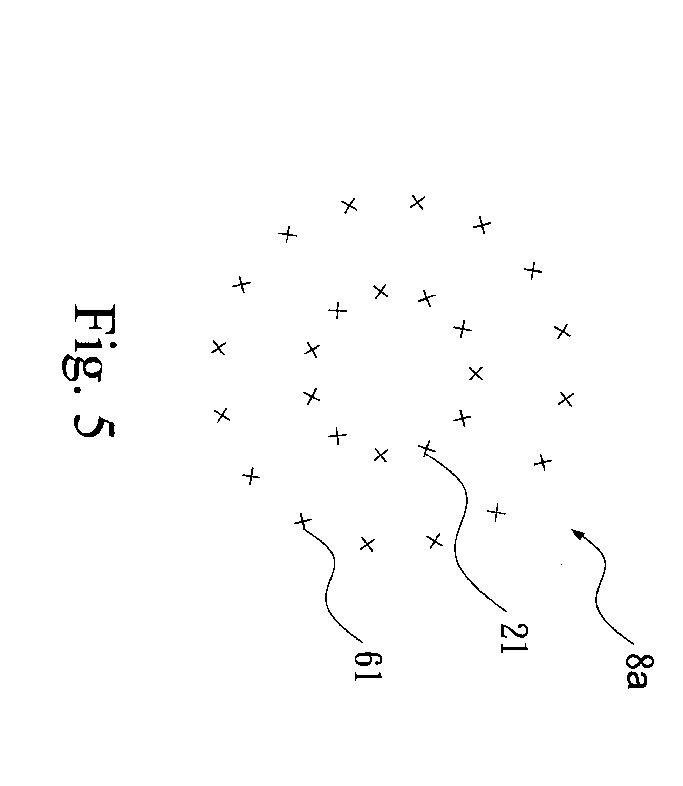

The apparatus shown in Fig. 2 can be used to make leads shown in Fig. 5. In this case, the first and second catalyst-providing units 3 and 5 and the proton-exchange-membrane -providing unit 4 are stopped. That is, only the first and second weaving units 2 and 6 are activated to make a pair of the leading wire 8b including only the first and second tubular conductive fabrics 21 and 61. Later, the pair of leading wire 8b can be cut and become the leading wires of current collectors of both electrodes of the tubular-shaped MEA for fuel cell assembly.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. An apparatus for continuously making a tubular-shaped membrane electrode assembly comprising:
a guiding unit (1) for guiding the direction of MEA production;
a first weaving unit (2) for weaving conductive fiber bundles into a first tubular conductive fabric around the guiding unit;
a first catalyst-providing unit (3) for forming a first catalyst film on the first tubular conductive fabric;
a proton-exchange-membrane-providing unit (4) for providing a proton-exchange-membrane on the first catalyst film;
a second catalyst-providing unit (5) for forming a second catalyst film on the proton-exchange-membrane;
a second weaving unit (6) for weaving conductive fiber bundles into a second tubular conductive fabric on the second catalyst film;
a cooling and pulling unit (7) for cooling and pulling the first tubular conductive fabric, the first catalyst film, the proton-exchange-membrane, the second catalyst film and the second tubular conductive fabric into a tubular laminate that can be cut into tubular-shaped membrane electrode assembly of appropriate lengths,
**characterized in that**
the proton-exchange-membrane-providing unit (4) melts resin grains or powders and provides the molten resin onto the first catalyst layer.

2. The apparatus according to claim 1, wherein the conductive fiber bundles are made of carbon.

3. The apparatus according to claim 1 or 2, wherein the first catalyst-providing unit provides electrode catalyst suitable for fuel cells on the first tubular conductive fabric.

4. The apparatus according to claim 1 or 2, wherein the first catalyst-providing unit provides electrode catalyst suitable for fuel cells in liquid, slurry or paste on the first tubular conductive fabric.

5. The apparatus according to one of claims 1 to 4, wherein the resin is proton-exchanging resin.

6. The apparatus according to one of claims 1 to 4, wherein the resin is precursor of proton-exchanging resin.

7. The apparatus according to one of claims 1 to 6, wherein the second catalyst-providing unit provides electrode catalyst suitable for fuel cells on the proton-exchanging resin.

8. The apparatus according to one of claims 1 to 6, wherein the second catalyst-providing unit provides electrode catalyst suitable for fuel cells in liquid, slurry or paste on the proton-exchanging resin.

9. The apparatus according to one of claims 1 to 8, wherein the thickness of proton-exchange membrane is in the range of one tenth to ten times of the inside diameter of the tubular-shaped membrane electrode assembly.

10. The apparatus according to one of claims 1 to 9, wherein the thickness of the first and second catalyst films is one tenth of a micrometer to several millimeters.

11. The apparatus according to one of claims 1 to 8, wherein said apparatus has a first working mode in which the first and second catalyst-providing units (3, 5) are stopped while only the first weaving unit (2), the proton-exchange-membrane-providing unit (4) and the second weaving unit (6) are activated to make a tubular assembly including only the first and second tubular conductive fabrics and and the proton-exchange membrane 41.

12. The apparatus according to one of claims 1 to 9, wherein said apparatus has a second working mode in which the first and second catalyst-providing units (3, 5) and the proton-exchange-membrane - providing unit (4) are stopped while only the first and second weaving units (2 and 6) are activated to make a pair of leading wires including only the first and second tubular conductive fabrics.

## Patentansprüche

1. Vorrichtung zur kontinuierlichen Herstellung einer röhrenförmigen Membran-Elektroden-Einheit, umfassend:
eine Führungseinheit (1) zum Führen der Produktionsrichtung der Membran-Elektroden-Einheit;
eine erste Web-Einheit (2) zum Verweben leitender Faserbündel zu einem ersten röhrenförmigen leitenden Gewebe um die Führungseinheit herum;
eine erste Katalysatorbereitstellungseinheit (3) zum Bilden einer ersten Katalysatorschicht auf dem ersten röhrenförmigen leitenden Gewebe;
eine Bereitstellungseinheit für eine Protonen-Austausch-Membran (4) zum Aufbringen einer Protonen-Austausch-Membran auf der ersten Katalysatorschicht;
eine zweite Katalysatorbereitstellungseinheit (5) zum Bilden einer zweiten Katalysatorschicht auf der Protonen-Austausch-Membran;
eine zweite Web-Einheit (6) zum Verweben leitender Faserbündel zu einem zweiten röhrenförmigen leitenden Gewebe auf der zweiten Katalysatorschicht;
eine Kühl- und Zugeinheit (7) zum Abkühlen und Ziehen des ersten röhrenförmigen leitenden Gewebes, der ersten Katalysatorschicht, der Protonen-Austausch-Membran, der zweiten Katalysatorschicht und des zweiten röhrenförmigen leitenden Gewebes zu einem röhrenförmigen Laminat, das zu einer röhrenförmigen Membran-Elektroden-Einheit mit entsprechenden Längen zugeschnitten werden kann,
**dadurch gekennzeichnet, dass**
die Bereitstellungseinheit für eine Protonen-Austausch-Membran (4) Kunstharzgranulat oder -pulver schmilzt und das geschmolzene Kunstharz auf die erste Katalysatorschicht aufbringt.

2. Vorrichtung nach Anspruch 1, bei der die leitenden Faserbündel aus Kohlenstoff bestehen.

3. Vorrichtung nach Anspruch 1 oder 2, bei der die erste Katalysatorbereitstellungseinheit einen für Brennstoffzellen geeigneten Elektrodenkatalysator auf das erste röhrenförmige leitende Gewebe aufbringt.

4. Vorrichtung nach Anspruch 1 oder 2, bei der die erste Katalysatorbereitstellungseinheit einen für Brennstoffzellen geeigneten Elektrodenkatalysator in Flüssigkeit, Schlämme oder Paste auf das erste röhrenförmige leitende Gewebe aufbringt.

5. Vorrichtung nach einem der Ansprüche 1 bis 4, bei der das Kunstharz ein Protonen austauschendes Kunstharz ist.

6. Vorrichtung nach einem der Ansprüche 1 bis 4, bei der das Kunstharz ein Vorprodukt eines Protonen austauschenden Kunstharzes ist.

7. Vorrichtung nach einem der Ansprüche 1 bis 6, wobei die zweite Katalysatorbereitstellungseinheit einen für Brennstoffzellen geeigneten Katalysator auf das Protonen austauschende Kunstharz aufbringt.

8. Vorrichtung nach einem der Ansprüche 1 bis 6, bei der die zweite Katalysatorbereitstellungseinheit einen für Brennstoffzellen geeigneten Katalysator in Flüssigkeit, Schlämme oder Paste auf das Protonen austauschende Kunstharz aufbringt.

9. Vorrichtung nach einem der Ansprüche 1 bis 8, bei der die Stärke der Protonen-Austausch-Membran im Bereich von einem Zehntel der Größe bis zehnmal die Größe des Innendurchmessers der röhrenförmigen Membran-Elektroden-Einheit liegt.

10. Vorrichtung nach einem der Ansprüche 1 bis 9, bei der die Stärke der ersten und zweiten Katalysatorschicht ein Zehntel Mikrometer bis mehrere Millimeter beträgt.

11. Vorrichtung nach einem der Ansprüche 1 bis 8, bei der die Vorrichtung über einen Arbeitsmodus verfügt, bei dem die erste und zweite Katalysatorbereitstellungseinheit (3, 5) angehalten werden, während nur die erste Web-Einheit (2), die Bereitstellungseinheit für eine Protonen-Austausch-Membran (4) und die zweite Web-Einheit (6) aktiviert sind, so dass eine röhrenförmige Einheit hergestellt wird, die nur das erste und zweite röhrenförmige leitende Gewebe und die Protonen-Austausch-Membran (41) umfasst.

12. Vorrichtung nach einem der Ansprüche 1 bis 9, bei der die Vorrichtung über einen zweiten Arbeitsmodus verfügt, bei dem die erste und zweite Katalysatorbereitstellungseinheit (3, 5) und die Bereitstellungseinheit für eine Protonen-Austausch-Membran (4) angehalten werden, während nur die erste und zweite Web-Einheit (2 und 6) aktiviert sind, um ein Paar Leitungsdrähte herzustellen, die nur das erste und zweite röhrenförmige leitende Gewebe umfassen.

## Revendications

1. Appareil pour fabriquer en continu un assemblage d'électrode à membrane de forme tubulaire comprenant:
une unité de guidage (1) pour guider le sens de la production de MEA;
une première unité de tissage (2) pour tisser des faisceaux de fibres conductrices en un premier tissu conducteur tubulaire autour de l'unité de guidage;
une première unité fournissant un catalyseur (3) pour former un premier film catalyseur sur le premier tissu conducteur tubulaire;
une unité fournissant la membrane échangeuse de protons (4) pour fournir une membrane échangeuse de protons sur le premier film catalyseur;
une seconde unité fournissant un catalyseur (5) pour former un second film catalyseur sur la membrane d'échange de protons;
une seconde unité de tissage (6) pour tisser des faisceaux de fibres conductrices dans un second tissu conducteur tubulaire sur le second film catalyseur;
une unité de refroidissement et de traction (7) pour refroidir et tirer le premier tissu conducteur tubulaire, le premier film catalyseur, la membrane échangeuse de protons, le second film catalyseur et le second tissu conducteur tubulaire qui peut être coupé en assemblage d'électrode à membrane de forme tubulaire de longueur appropriée,
**caractérisé en ce**
**que** l'unité fournissant la membrane échangeuse de protons (4) fond des grains ou des poudres de résine et fournit la résine fondue sur la première couche de catalyseur.

2. Appareil selon la revendication 1 dans lequel les faisceaux de fibres conductrices sont en carbone.

3. Appareil selon la revendication 1 ou 2 dans lequel l'unité fournissant la membrane échangeuse de protons fournit un catalyseur d'électrode approprié pour des cellules électrochimiques sur le premier tissu conducteur tubulaire.

4. Appareil selon la revendication 1 ou 2 dans lequel la première unité fournissant la membrane échangeuse de protons fournit un catalyseur d'électrode approprié pour des cellules électrochimiques dans du liquide, du coulis ou de la pâte sur le premier tissu conducteur tubulaire.

5. Appareil selon l'une des revendications 1 à 4 dans lequel la résine est une résine échangeuse de protons.

6. Appareil selon l'une des revendications 1 à 4 dans lequel la résine est un précurseur de la résine échangeuse de protons.

7. Appareil selon l'une des revendications 1 à 6 dans lequel la seconde unité fournissant la membrane échangeuse de protons fournit un catalyseur d'électrode approprié pour des cellules électrochimiques sur la résine échangeuse de protons.

8. Appareil selon l'une des revendications 1 à 6 dans lequel la seconde unité fournissant la membrane échangeuse de protons fournit un catalyseur d'électrode approprié pour des cellules électrochimiques dans du liquide, du coulis ou de la pâte sur la résine échangeuse de protons.

9. Appareil selon l'une des revendications 1 à 8 dans lequel l'épaisseur de la membrane échangeuse de protons est de l'ordre d'un dixième à dix fois le diamètre intérieur de l'assemblage d'électrode à membrane de forme tubulaire.

10. Appareil selon l'une des revendications 1 à 9 dans lequel l'épaisseur des premier et second films catalyseurs est d'un dizième de micromètre à quelques millimètres.

11. Appareil selon l'une des revendications 1 à 8 dans lequel ledit appareil a un premier mode de travail dans lequel les première et seconde unités fournissant un catalyseur (3, 5) sont arrêtées lorsque seulement la première unité de tissage (2), l'unité fournissant la membrane échangeuse de protons (4) et la seconde unité de tissage (6) sont activées pour faire un assemblage tubulaire comprenant seulement les premier et second tissus conducteurs tubulaires et la membrane échangeuse de protons 41.

12. Appareil selon l'une des revendications 1 à 9 dans lequel ledit appareil a un second mode de travail dans lequel les première et seconde unités fournissant un catalyseur (3, 5) et l'unité fournissant la membrane échangeuse de protons (4) sont arrêtés pendant que les première et seconde unités de tissage (2 et 6) sont activées pour faire une paire de fils conducteurs comprenant seulement les premier et second tissus conducteurs tubulaires.
